# EUROPEAN PATENT SPECIFICATION

(11) **EP 1 628 772 B1**
(45) Date of publication and mention of the grant of the patent: **29.04.2020**
(21) Application number: 03787748.7
(22) Date of filing: 17.08.2003
(51) Int. Cl.: B02C 4/02, B02C 19/00, B03B 9/06, B07B 9/00, B02C 21/02

(54) **METHOD AND PLANT SEPARATION OF COMPOSED MATERIALS, PREFERABLY WASTE CONSTRUCTION MATERIALS**
VERFAHREN UND ANLAGETRENNUNG VON ZUSAMMENGESETZTEN MATERIALIEN, VORZUGSWEISE BAUABFALLMATERIALIEN
PROCEDE ET SEPARATION INDUSTRIELLE DE MATERIAUX COMPOSES, DE PREFERENCE DE DECHETS DE MATERIAUX DE CONSTRUCTION

(30) Priority: 18.08.2002 DK 200201227
(43) Date of publication of application: 01.03.2006
(73) Proprietor: Ballermann, Karin, 9500 Hobro (DK)
(72) Inventor: FRANDSEN, Johan Boy, 9500 Hobro (DK)
(86) International application number: PCT/DK2003/000547
(87) International publication number: WO 2004/016355

(56) References cited:
- WO-A1-00/71257
- DE-U1- 20 004 472
- GB-A- 1 587 636
- US-A- 5 100 063

## Description

The present invention relates to a method and plant for separation of composed materials, preferably waste construction materials.

Especially in connection with construction projects, such as remodelling and demolition of buildings, large quantities of composed waste materials often occur, some of which are combustible and some which are not. Especially the materials composed of combustible and non-combustible materials entail large quantities of waste which as a rule must be hauled to controlled disposal sites. This entails transportation costs and waste management fees. In the following, reference is made to plasterboards as the composed material which is to be separated, but it is underlined that also the processing of other types of composed waste materials can occur; materials which are to be separated to such a degree that the amount of waste material to be deposited after the separation is minimal or not requiring disposal at all as the recovered product will be so pure that it can be recycled.

In connection with remodelling and demolition interior walls and ceilings covered by the well-known plasterboards are broken down, resulting in large quantities of waste as the knocked-down plasterboards contain large quantities of gypsum and cardboard adhering to the gypsum.

From US 5 100 063 a method for separation and processing composed waste construction materials, for example plasterboard, is known. This method includes the following steps:
- shredding of the composed material
- feeding of the composed material into a crusher where it is wrenched and rolled
- screening of the crushed material, and
- conveying the separated fractions to bins, heaps or containers for collection.

From the aforementioned patent a plant for separating and recycling of composed materials is also known. The plant includes a shredder, a crusher/roller unit, which receives the shredded material from the shredder, a first conveyor station for conveying the material to a screen which separates cardboard and gypsum, and a number of additional conveyor stations for further conveying of the separated sub-fractions (cardboard and gypsum) for further processing 10 and/or heaps, bins or containers.

The aforementioned plant is suitable for separating gypsum and paper from knocked-down waste plasterboards, and there is no hindrance that the gypsum from the aforementioned boards can be recycled and processed to new plasterboards. However, recycling requires that gypsum and cardboard in the waste plasterboards are totally separated from each other, which contrary to expectations is not always the case in spite of the fact that the materials have been shredded and subsequently crushed/rolled. Furthermore, recycling requires that other sub-fractions of construction waste, if any, are totally removed from the gypsum. The aforementioned other sub-fractions may include for example metallic parts such as metal profiles or parts hereof from the plasterboard framework, other kinds of fixtures for the fixing of the plasterboards to the structural parts, or nails, screws and metallic parts of this kind which have been used for mounting purposes on the wall side of the boards.

Therefore, the present invention is directed to a method for the efficient separation and reprocessing of composed materials, preferably waste construction materials for example knocked-down plasterboards, which ensures the removal of the metal fractions from these materials, and a plant for performing the method which also ensures an efficient separation of gypsum and cardboard from plasterboards.

A suitable method for separation and reprocessing of composed materials, preferably waste construction materials, is defined in the appended claims 1 and 2.

The advantage of this being that immediately after shredding and crushing of the material a segregation of metallic parts, if any, is carried out, before the crushed material is screened in order to separate the sub-fractions in the composed material, which ensures that the screen is not clogged by the metallic parts in question and there is no wear and tear on the screen from these metallic parts. Therefore the metallic parts are removed from the sub-fractions into which the material is separated in the screen. When reprocessing plasterboard according to this method the sub-fractions which result from the screening after the magnetic separation, namely cardboard and gypsum, are essentially free from metal, which means that the gypsum fraction can be recycled in the production of new plasterboards and the paper fraction can be pressed, combusted or recycled. However, tests carried out with the method forming the subject of the present invention have shown that the fractions after screening may contain further metallic parts which have not been removed in the process in the first magnet separator, which means that the sub-fractions cannot be considered pure recycling materials which can be used directly without further processing. In order to ensure an approximately 100% removal of metallic parts from the sub-fractions, another segregation of metal is carried out in a second magnet separator between process steps c) and d) for one or more of the separated sub-fractions.

The method according to the present invention can be especially suitable for separation of waste plasterboards where the roller/wrenching unit ensures an efficient separation of cardboard from the adherent gypsum. As the presence of metals in the materials will reduce the efficiency of the screening, a first segregation of metals is therefore carried out before the material crushed in the roller/ wrenching unit is conveyed to the screen. The screening ensures a separation into mainly a cardboard fraction and a gypsum fraction of the crushed but mixed materials. And as the recycling of the gypsum requires that the gypsum is 100% pure and free from other occurring materials such as metal, this fraction is therefore submitted to a second segregation of metal so that the gypsum material that is subsequently transported to a heap, bin, container or the like is metal-free. With the intention of releasing the gypsum that contrary to expectation still can adhere to very few of the pieces of cardboard that are fed into a drum screen and which further may contain metallic parts which have not been segregated in the first magnet separator, the drum screen comprises an interior cantilevered roller near the discharge for the cardboard sub-fraction of the drum screen, which in contact with the interior side of the screen and which crushes this gypsum and thereby releases it from the cardboard pieces. In this way a nearly 100% removal of gypsum from the cardboard pieces is obtained and further the metallic parts, if any, in the material crushed by the cantilevered roller in the drum screen, will be segregated when this fraction is processed in the following second magnet separator.

Of course some of the fractions may be submitted to other separation processes, for example it will be possible to remove contents of plastics, if any, from the cardboard fraction to enable the recycling of the cardboard fraction in industrial composting or for paper pulp.

In order to obtain a volume reduction of the bulky sub-fraction parts of the composed material, a compression of one or more of these fractions can be carried out as stated in claim 2.

In the reprocessing of waste plasterboard it is therefore accomplished through compression that the cardboard fraction can be used as fuel briquettes. Further the compression entails a reduced transport volume of this fraction. Also contents of plastic - if any - segregated from the cardboard section may be compressed.

A plant for the performance of the method according to claim 1 is embodied in claim 3.

So after processing plasterboards in this plant in which the separated gypsum is subjected to a second magnet separation for the segregation of metallic parts, if any, that have not been removed in the first magnet separator, the gypsum will be ready for immediate recycling as a raw material in the production of new plasterboards. Further the cardboard fraction can be recycled either in industrial composting where the cellulose in the paper is a desired carbon source. As stated above, the interior cantilevered roller functions to release the gypsum that contrary to expectation still can adhere to very few of the pieces of cardboard that are fed into the drum screen and which further may contain metallic parts which have not been segregated in the first magnet separator. In this way a nearly 100% removal of gypsum from the cardboard pieces is obtained and further the metallic parts, if any, in the material crushed by the cantilevered roller in the drum-screen, will be segregated when this fraction is processed in the following second magnet separator.

In order to obtain an optimal separation of cardboard and gypsum the rotary speed of the drum screen and/or the inclination of the screen towards the discharge may be adjustable. In this way the preferred flow rate and thus the preferred processing time of the material in the screen is obtained.

In order to obtain a volume reduction of bulky sub-fractions of the composed material after screening, the plant may feature at least one compression unit for the compression of one or several of the sub-fractions of the composed material screened in the drum screen and in this connection conveyor stations by means of which the compressed material via conveyor stations is transported to heaps, bins, containers or the like.

In this way for example cardboard and paper can be compressed to fuel briquettes which are easier to handle and transport than bulk material of this kind.

In order to be able to segregate also impurities from the sub-fractions, the plant may feature one or more separating units for sorting out materials from one or more sub-fractions with corresponding conveyor stations for the transport of the segregated material and of the pure sub-fraction to heaps, bins, containers or the like.

During the operation of the plant for processing composed materials it will be necessary to carry away the individual sub-fractions that are resulting from the plant in a suitable way. This applies to the smaller fractions but mainly to the fractions with high tonnage. At the same time it will be practically a must that the transport of the sub-fractions to bins, heaps or containers can be carried out without manual work apart from the provision and collection of bins or containers. Especially for the transport of the main sub-fractions several bins or containers will be needed and to avoid periods of idleness it will be necessary that during the operation, material can be transported from the plant to several bins or containers by means of one and the same discharge conveyor which changes the discharge area of the conveyor for example from one container to the next for the same sub-fraction when the first container is full. To this end the plant forming the subject of the present invention can be designed in such a way that at least one of the conveyor stations conveying one or more sub-fractions of the composed material to heaps, bins, containers or the like is designed as a turnable and tiltable conveyor.

In order to obtain a distribution of the material from the conveyor over the total area of the container/bin without manual labour, the turnable and tiltable conveyor discharges into an essentially horizontal conveyor with a discharge area that is adjustable in the longitudinal direction of the conveyor essentially by means of an actuator.

In this way the material conveyed by the horizontal conveyor can be distributed evenly over the inside area of the container underneath.

In order to control the filling of the container by means of the horizontal conveyor this can be equipped with a sensor for registration of the distance between the level of the discharge of the conveyor and the level of the material discharged by the conveyor in the discharge area.

To obtain full automation of the filling of the bins or the containers, the aforementioned sensor may be connected to a control unit designed in such a way that on the basis of a programmed distance between the level of the discharge of the conveyor and the level of the material discharged by the conveyor in the discharge area and the signals received from the sensor the control unit activates the actuator in order
to change the discharge area of the conveyor as soon as the programmed distance is reached.

In order to obtain suitable transport of the separated sub-fractions of the composed material, the conveyor units are preferably designed as screw conveyors and/or belt conveyors.

Further especially the use of screw conveyors ensures that the transport is carried out in a closed space, which is advantageous in relation to the prevention of dust emission from the plant and the use of screw conveyors makes a variable discharge area possible, as the bottom plate of the screw conveyor features an opening which is movable in the longitudinal direction of the conveyor because of the telescopic nature of the said bottom plate.

In order to minimize the transport of the composed materials from the source to the places where the recycled sub-fractions are used, the plant forming the subject of the present invention is mounted on a chassis with wheels.

This gives the advantage of a mobile plant that can be moved to the place of the source of the composed material where the plant is put into operation for processing compose materials into its original sub-fractions. Then the sub-fractions are stored in heaps, bins, containers or the like, and transported directly to the recycling place.
As the components of the plant forming the subject of the present invention are mainly driven by electric motors, operation of the plant will entail a rather high power consumption at the place of operation. When demolition or remodelling works have reached the stage where composed waste
materials occur, the power will often have been interrupted leading to an energy supply problem. Further, it is also doubtful whether the necessary power capacity for the operation of the plant is available. In order to ensure that the plant can operate at any location, it will often be an
advantage to supply the plant with a generator with sufficient energy capacity for the operation of the plant.

Shredding, rolling/wrenching and screening etc. involves a mechanical impact on the composed, shredded material. This invariably leads to a heavy generation of dust at the plant site and in the vicinity which can be a nuisance to the people living in the area and to people passing by the area of operation. In order to eliminate or reduce the dust emission the plant may be enclosed and feature a suction device with dust and particle filters at the air discharge. The filters are counter flushed with compressed air and the filtered out dust is led to the material flow to the drum screen by means of the screw conveyor.

In this way the need for regular emptying/cleaning of the suction device filters and the need to deposit waste from the plant in connection with the operation is eliminated. At the same time all applicable regulations and dust emission limits in connection with demolition works are met.

In order to ensure that there is no dust emission where the shredded, separated material from the essentially horizontal conveyor is filled into for example a container in free fall, the conveyor may be covered in its entire length
with dust covers which can be rolled down and which are mounted between the sides of the conveyor and the upper edges of the container.

In this way a marked reduction of the dust emission from this part of the plant is obtained, and if a suction under vacuum is carried out through the magnet separators, an underpressure will be created throughout the conveyor which due to the cover between the¹ conveyor and the container will practically eliminate all dust emission from this part of the plant. The air suction through the magnet separators creates an underpressure in and around the shredder and the conveyor station which are the main dust sources of the plant.

The advantage of using screw conveyors is that the tube-formed channels for these conveyors are also used as suction channels for the suction of air, which is filtered through filters before it is discharged to the open air.

The invention is further described by the drawing:
Fig. 1 is a flow chart which schematically shows the part processes for separation and recycling of materials, preferably waste construction materials, especially suitable for the processing of knocked-down plasterboards.
Fig. 2 is a schematic side view of a plant for separation and reprocessing of materials, preferably waste construction materials for the performance of the part processes stated in fig. 1.
Fig. 3 is a detailed side view of the shredding station of the plant with the roller/wrenching unit,
Fig. 4A is a top view of the basic design of the roller/wrenching unit of the plant
Fig. 4B is a side view of the roller/wrenching unit according to fig. 4A.

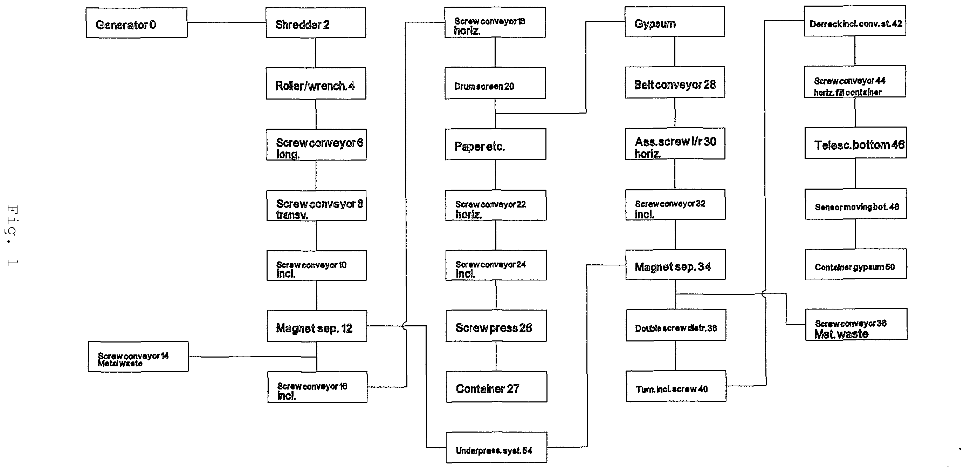

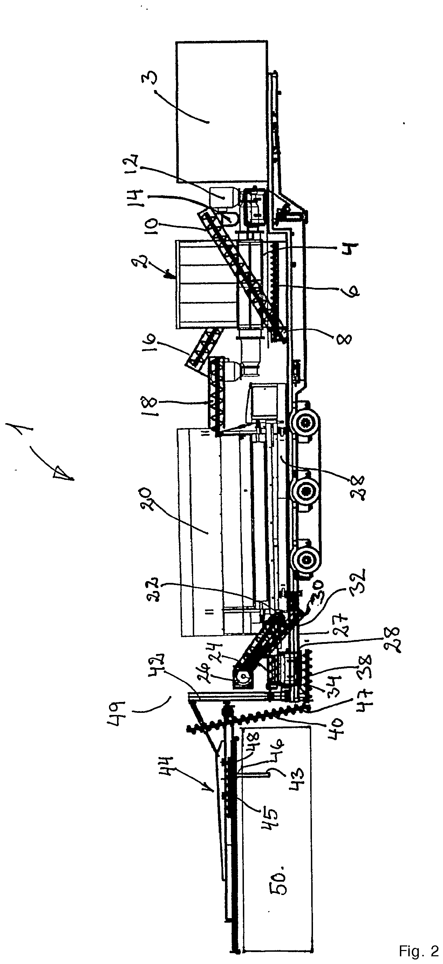

Fig. 1 shows the processes through which a composed material (not shown) is put in connection with separation and reprocessing according to the method forming the subject of the present invention, and reference is also made to fig. 2 which shows the components of a plant for the performance of the method for separation and reprocessing of composed materials, preferably waste construction materials, forming the subject of the present invention.

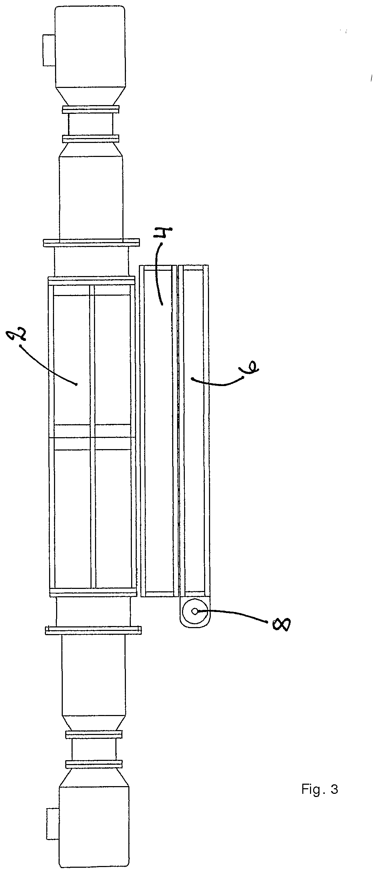

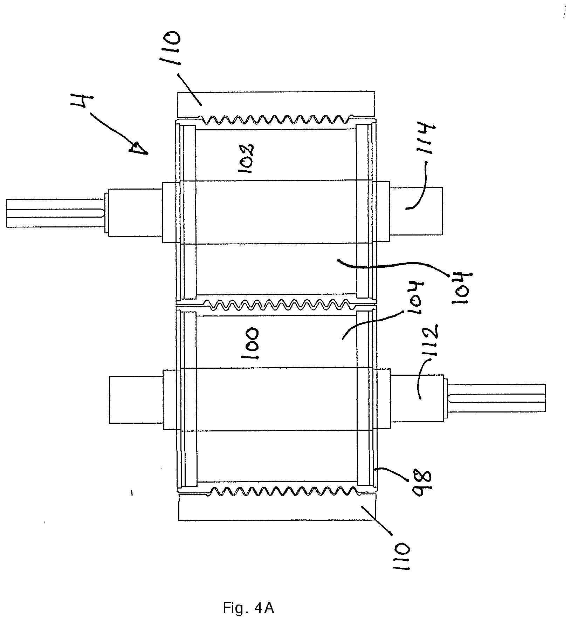

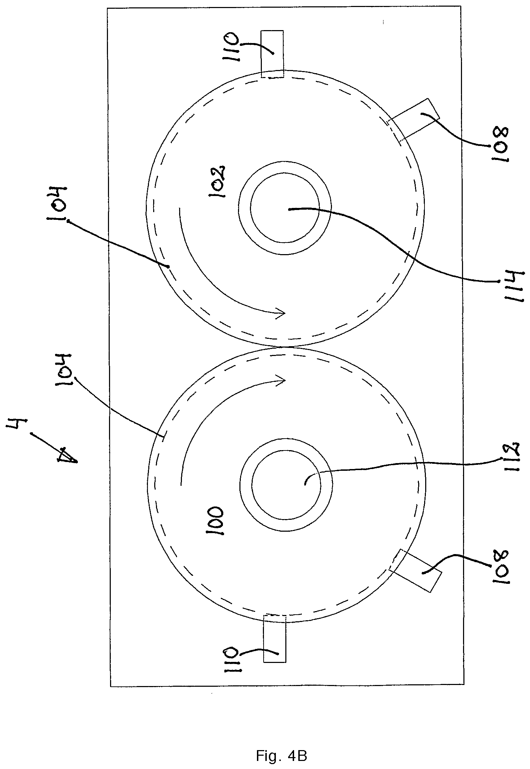

The material (not shown) is first fed into a shredder 2 in which the material is shredded and immediately afterwards is fed into a roller/wrenching unit 4, compare figs. 3, 4A, 4B, in which the shredded material is processed between rollers 100, 102 carried by a chassis 98, with shafts 112, 114, where roller surfaces 104 feature a mutually interactive corrugated surface pattern, between which the material is processed in several ways, namely through normal crushing between the rollers, but because of the surface pattern of the rollers the material is also subjected to wrenching which leads to a separation of the shredded composed material into its original sub-components. Because of the fact that rollers 100, 102 are driven at different speeds of rotation, a further squeezing of the shredded material between the rollers is obtained. This squeezing further improves the release of the sub-components of the shredded composed
material. As can be seen from fig. 5, the roller/wrenching unit further includes scrapers 108, 110 on the underside for scraping off adherent material, if any.

The composed material now processed is fed into a magnet 15 separator 12 via a longitudinal screw conveyor 6 underneath the roller/wrenching unit 4, a transverse screw conveyor and a screw conveyor 10, inclining in the flow direction of the material.

Already at this stage it must be noted that the entire plant 1 in the embodiment shown is assumed to be supplied with electric power from a generator 3 which is part of the plant, but in connection with the energy supply of the plant there will naturally also be facilities for connecting the plant to the normal mains supply.

In the magnet separator 12, which in itself is a magnet separator of a known type, the metal waste is segregated from the material flow of shredded and crushed material and the metal waste is conveyed via a screw conveyor 14 to a heap, bin, container or the like.

The material flow is conveyed further through the plant in an inclined screw conveyor 16 and in an essentially horizontal screw conveyor 18 to a drum screen 20, in which cardboard, paper etc. is separated into one separate sub-fraction and the gypsum into another separate fraction.

Cardboard, paper etc. is carried away in an essentially horizontal screw conveyor 22 and an inclined screw conveyor 24 via a screw press 26 where the cardboard, paper etc. is compressed before it is led to a container 27. The
compression may be carried out with such a force that the compressed material can be utilized as fuel briquettes.

The gypsum is transported via the belt conveyor 28, assembling screws 30, an inclined screw conveyor 32 and a horizontal screw conveyor 33 to a second magnet separator 34 for segregation of residual metallic parts, if any, in the gypsum. The segregated waste metal is carried away to a heap, bin or container via a screw conveyor 36.

The gypsum which is now ready for recycling goes to a closed container 50 via a double screw distributor 38, from where the gypsum can be distributed into at least one of two turnable inclined screw conveyors 40 to essentially horizontal conveyor stations 44 carried by swivel derricks 42
including a screw conveyor 45. The conveyor stations 44 are suspended in turnable derricks 42 in such a way that the conveyor stations 44 are turnable around the axis of rotation of the derricks 4 9 in the place where these are supported by the chassis of the plant 47 at the corners so that the
conveyor stations can be turned from filling the first container 50 to filling a second container (not shown) placed in the immediate proximity of the first container and within the radius of action of the conveyor stations. Furthermore the conveyor stations 44 are suspended in such a way on the turnable derricks 42 that the conveyor stations 44 can be inclined as required.

The screw conveyor 45 of the conveyor station 44 features a telescopic bottom 4 6 so that the discharge area of the screw conveyor 45 is adjustable in essentially the total longitudinal axis of the conveyor. Thus the filling of the container 50 placed underneath the conveyor can be carried out without use of manual labour.

The adjustment of the telescopic bottom 46 of the screw conveyor 45 is controlled by the control unit of the plant (not shown) and for the monitoring of the filling ratio (the level of material in the container 50 in relation to the telescopic bottom 46 of the screw conveyor (45)) the underside of the screw conveyor 45 features a distance meter 48 for measuring the distance between the level of the conveyor discharge and the level of the material discharged from the conveyor discharge. The distance meter is connected to the control unit of the plant and supplies information about the actual filling level of the container 50 below the position of the actual conveyor discharge area and the control unit is designed to initiate a shift of the conveyor discharge area to an area where the required filling level has not been reached yet when the filling level reaches a pre-programmed distance from the underside of the conveyor 45 to the loaded material, and when the container is full, the screw conveyor is stopped momentarily while by means of the turnable derrick the conveyor is turned to a position over an
empty container placed in the proximity of the full one and within the radius of action of the conveyor at the same time as the conveyor station at the opposite side of the chassis is activated and begins to fill the container 50 placed underneath the conveyor discharge area 43.

The horizontal conveyor 45 further features dust covers (not shown) in the total length of the conveyor supported on roller stays parallel to and on either side of the longitudinal axis and discharge area of the conveyor. During
the filling of a container placed underneath the conveyor, these covers are rolled out and are placed hanging onto the upper-side edges of the container forming a closed space under the conveyor during the filling of the container which contributes to the fact that the dust emission for example
during the loading of crushed gypsum is minimal. The dust emission can be reduced further and practically eliminated through establishing a vacuum below the dust covers which is achieved by means of the suction through magnet separators
12, 34. By establishing suction of air through the magnet separators by means of a suction device 54 an under-pressure is obtained in and around the shredder 2 and the conveyor station 44, i.e. the main dust sources in the plant.

The suction device 54 features filters (not shown) which are counter flushed with compressed air, and the filtered-out dust is led to the material flow being taken to the drum screen 20 by means of the screw conveyor 18. In this way the
need of a regular emptying/cleaning of the suction device 54 filters and the need to deposit waste from the plant in connection with the operation is eliminated. At the same time all applicable regulations and dust emission limits in connection with demolition works are met.

The advantage of using screw conveyors is that the tube formed channels for these conveyors are also used as suction channels for the suction of air, which is filtered through filters before it is discharged to the open air. The dust
covers can, however, be suspended in the same way as a sunshade with foldable arms and with tiltable support around a horizontally oriented axis so that the folded out covers can be raised and lowered mechanically/automatically from and to the upper edges of the container.

Thus an extremely efficient plant for separation and reprocessing of composed materials, preferably waste construction materials, is provided which solves both environmental problems in connection with depositing of, for example construction waste, and which enables composed materials, for example plasterboards, which were previously regarded as waste because there was no cost-effective method and no equipment for separation of cardboard, gypsum etc., to be completely separated so that the sub-components of the waste plasterboards, namely gypsum, cardboard, metal, plastics etc. can be totally separated and reprocessed for recycling. Further it will be possible to achieve marked pollution reductions in connection with the transport of the sub-components to the place of recycling, as the plant is of a mobile design.

Of course the inventor has realized that the plant can have other embodiments than the aforementioned embodiment shown in the drawings. Thus it would be possible to establish another roller/wrenching unit for an additional processing of the shredded material if the composed material makes this necessary and the plant may feature additional screens etc. but this does not change the inventive aspect directed to a method and a plant for the solution of a hitherto unsolved problem, namely for the separation of composed materials in such a way that these basic components can be reprocessed.

## Claims

1. Method for separation and reprocessing of composed materials, preferably waste construction materials, by using a plant according to claim 3, said method including the following steps;
a) - shredding of the composed material in a shredder (2)
b) - feeding the shredded material into a roller/wrenching unit (4), arranged directly below the shredder (2),
c) - screening of the shredded and crushed material in a drum screen to separate the sub-components in the composed material (20), :
d) - transport of the separated sub-components to bins, heaps, or containers (50), :
wherein between process steps b) and c) a first segregation of metals from the crushed material is carried out in a first magnet separator (12), and
wherein between the process steps c) and d) a second segregation of metals is carried out in a second magnet separator (34) relative to one or several of the separated sub-components, wherein between the drum screen and the interior cantilevered roller being in contact with the interior side of the screen a step of crushing and releasing the gypsum from the cardboard pieces takes place.

2. The method forming the subject of claim 1 or 2, **char acterised** in that at least one of the subcomponents of the separated material is compressed in a compression unit (26) and the compressed material is processed in such a way that the compressed form is maintained.

3. Plant for for performing the method of claim 1 comprising a shredder (2), a roller/wrenching unit (4) arranged directly below the shredder (2), the roller/wrenching unit (4) receives and crushes the shredded material from the shredder (2), a conveyor station (16, 18) for feeding the material from the roller/wrenching unit into a drum screen (20) featured in the plant for the separation of the composed material into at least two sub-fractions and a number of conveyor stations (38, 40, 42, 44), corresponding to the number of sub-fractions for conveying the sub-fractions to further processing and/or to heaps, bins, containers or the like, **characterised in that** the plant between the roller/wrenching unit (4) and the drum screen (20) further features a conveyor station (6, 8, 10) for conveying the crushed composed material to a first magnet separator (12), a second conveyor station (14) for the carrying away of the segregated metal to a first heap or a first container for metal waste and that the plant further features a second magnet separator (34) for processing at least one of the sub-fractions of the composed material from the drum screen in which the segregated metal via a fourth conveyor station (36) is carried to a second heap or second bin, container or the like for metal waste and a fifth conveyor station (38, 40, 42, 44) for conveying the sub-fraction of the composed material that has been cleaned from metal to a heap, bin, container (50) or the like, and that the drum screen in the proximity of the discharge for the cardboard sub-fraction features an interior cantilevered roller which is in contact with the interior side of the screen and which crushes and releases the gypsum from the cardboard pieces.

4. Plant according to claim 3, **characterised in that** it features at least one compression unit (26) for the processing of one or more of the sub-fractions of the composed material separated in the drum screen and in this connection conveyor stations by means of which the compressed material is conveyed to heaps, bins, container or the like.

5. Plant according to claim 3 or 4, **characterise** d in that it features one or more separation units (20, 26) for separation of the material into one or more sub-fractions with corresponding conveyor stations for conveying the separated materials and the residual sub-fractions into heaps, bins, containers (50) or the like.

6. Plant according to any of claims 3 to 5, **characte rised** in that at least one of the conveyor stations for conveying one or more of the sub-fractions of the composed material into a heap, bin, container or the like is a turnable and tiltable supported conveyor (40).

7. Plant according to claim 6, **characterised in that** the turnable, tiltable supported conveyor (40) discharges into an essentially horizontal conveyor (44) with a discharge area (43) that is adjustable in the longitudinal direction of the conveyor essentially by means of an actuator.

8. Plant according to claim 7, **characterised in that** the horizontal conveyor (44) features a sensor (48) for the registration of the distance between the level of the conveyor discharge area (43) and the level of the material which the conveyor discharges from the discharge area of the conveyor.

9. Plant according to claim 8, **characterised in that** the conveyor is connected to a control unit which is designed in such a way that, on the basis of a programmed distance between the conveyor discharge area (43) to the level of the material which the conveyor discharges from the discharge area and signals received from the sensor (48), the control unit activates the actuator to change the conveyor discharge area (43) as soon as the programmed distance is reached.

10. Plant according to any of claims 3 to 9, **charact erised** in that the conveyor stations (6, 8, 10, 14, 16, 18, 22, 24, 30, 32, 33, 36, 38, 40, 44) preferably are screw conveyors and/or closed belt conveyors or redlers.

11. Plant according to any of claims 7 to 10, **charact erised** in that the discharge area of the horizontal conveyor (43) is adjustable as the bottom plate of the screw conveyor (46) features an opening (43) which is movable in the longitudinal direction of the conveyor because of the telescopic nature of this bottom.

12. Plant according to claim 11, **characterised in that** the horizontal screw conveyor (44) alongside features parallel continuous rolling stays for the rolling-out and rolling-in of the cover for the opening of the container beneath.

13. Plant according to any of claims 3 to 12, **charact erised** in that the plant (1) is mounted on a chassis with wheels (47).

14. Plant according to any of claims 3 to 13, **charact erised** in that it further features a generator (3) the capacity of which is sufficient for the energy supply of the plant.

15. Plant according to any of the claims 3-14, **chara cterised** in that the plant is enclosed and features a suction device (54) with dust and particle discharge filters, said filters being counter flushed with compressed air, so that the filtered out dust by means of the screw conveyor (18) is let to the material flow to the drum screen (20).

## Patentansprüche

1. Verfahren und Anlagentrennung von zusammengesetzten Materialien, vorzugsweise Bauabfallmaterialien, durch Verwendung der Anlage entsprechend Patentanspruch 3, dieses Verfahren umfasst die folgenden Schritte;
a) - Zerkleinerung der zusammengesetzten Materialien in einem Shredder(2)
b) - Zuführung der zerkleinerten Materialien zu einer Walzen-/Wringeinheit (4), die sich unmittelbar unter dem Shredder (2) befindet,
c) - Sieben der zerkleinerten und gebrochen Materialien in einem Sieb, um die Unterkomponenten von den zusammengesetzten Materialien trennen (20),
d) - Förderung der ausgeschiedenen Unterkomponenten zu Behältern, Haufen oder Containern (50),
wobei zwischen den Verfahrensschritten b) und c) eine erste Absonderung von Metallen von den zerkleinerten Materialien zunächst in einem ersten Magnetschneider (12) erfolgt,
und wobei zwischen den Verfahrensschritten c) und d) eine zweite Absonderung von Metallen in einem zweiten Magnetscheider(34) in Bezug auf eine oder mehrere der ausgeschiedenen Unterkomponenten erfolgt.

2. Das Verfahren entsprechend Patentanspruch 1 oder 2 **dadurch gekennzeichnet, dass** wenigstens eine der Unterkomponenten des separierten Materials in einer Komprimier-Einheit (26) komprimiert wird, und das komprimierte Material derart gehandhabt wird, dass die komprimierte Form erhalten bleibt.

3. Anlage für das Separieren und die Wiederaufbereitung von zusammengesetzten Materialien, vorzugsweise Bauabfallmaterialien, die einen Shredder (2), eine Walzen-/Wringeinheit (4), die das zerkleinerte Material von dem Shredder (2) empfängt und zerbricht, eine Förderstation (16, 18) für die Förderung des Materials von der Walzen-/Wringeinheit zu einem Trommelsieb (20), das in der Anlage dazu dient, das Zusammengesetzte Material in wenigsten zwei Subfraktionen zu trennen, und eine Zahl von Förderstationen (38, 40, 42, 44), entsprechend der Anzahl der Subfraktionen, um diese zur weiteren Verarbeitung und/oder Haufen, Behältern, Containern oder dergleichen zu fördern, **dadurch gekennzeichnet, dass** die Anlage zwischen der Walzen-/Wringeinheit (4) und dem Trommelsieb (20) außerdem eine Förderstation (6, 8, 10) für die Förderung des zerbrochen zusammengesetzten Materials zu einem ersten Magnetscheider (12), eine zweite Förderstation (14) für die Entsorgung des abgesonderten Metalls zu einem ersten Haufen oder einem ersten Container für Metallabfälle umfasst, und dass die Anlage ferner einen zweiten Magnetscheider (34) für die Verarbeitung von wenigstens eine der Subfraktionen des zusammengesetzten Materials von dem Trommelsieb, in dem das abgeschiedene Metall mit einer vierten Förderstation (36) zu einem zweiten Haufen oder Behälter, Container oder dergleichen für Metallabfälle gefördert wird, und eine fünfte Förderstation (38, 40, 42, 44) für die Förderung der Subfraktion des zusammengesetzten Materials, die von Metall befreit worden ist, zu einem Haufen, Behälter, Container (50) oder dergleichen, und dass das Trommelsieb in der Nähe der Entladung der Karton-Subfraktionen eine interne freitragende Druck-/Walzenrolle umfasst, die mit den Innenseiten des Siebs in Kontakt steht, und die den Gips zerbricht und von dem Karton befreit.

4. Anlage entsprechend Patentanspruch 3, dadurch **geken nzeichnet**, dass die Anlage mindestens eine Komprimier-Einheit (26) für die Bearbeitung von einer oder mehrerer der in dem Trommelsieb separierten Subfraktionen des zusammengesetzten Materials umfasst, und in diesem Zusammenhang Förderstationen, mit denen das komprimierte Material zu Haufen, Behältern, Containern oder dergleichen befördert wird.

5. Anlage entsprechend Patentanspruch 3 oder 4, dadurch **ge kennzeichnet**, dass die Anlage eine oder mehrere Separatoren (20, 26) für die Separation von dem Material in eine oder mehrere Subfraktionen mit entsprechenden Förderstationen für die Förderung der separierten Materialien und der restlichen Subfraktionen zu Haufen, Behältern, Containern (50)oder dergleichen befördert werden, umfasst.

6. Anlage entsprechend den jeweiligen Patentansprüchen 3 bis 5, **dadurch gekennzeichnet, dass** mindestens eine der Förderstationen für die Förderung von einer oder mehrerer der Subfraktionen des zusammengesetzten Materials zu einem Haufen, Behälter, Container oder dergleichen ein drehbarer und kippbarer unterstützter Förderer (40) ist.

7. Anlage entsprechend Patentanspruch 6, dadurch **geken nzeichnet**, dass der drehbare und kippbare unterstützte Förderer (40)in einen im Wesentlichen horizontalen Förderer (44) mit einem Entladebereich (43) entladet, der in der Längsrichtung des Förderers im Wesentlichen mit Hilfe eines Stellantriebs justierbar ist.

8. Anlage entsprechend Patentanspruch 7, dadurch **geken nzeichnet**, dass der horizontale Förderer (44) einen Sensor (48) für die Erfassung des Abstandes zwischen dem Niveau des Entladebereichs des Förderers (43) und dem Niveau des Materials, das der Förderer vom Entladebereich des Förderers entladet.

9. Anlage entsprechend Patentanspruch 8, dadurch **geken nzeichnet**, dass der Förderer mit einem derart konstruierten Steuergerät verbunden ist, das aufgrund eines programmierten Abstandes zwischen dem Entladebereich (43) des Förderers und dem Niveau des Materials, das der Förderer vom Entladebereich des Förderers entladet, und der vom Sensor (48) empfangenen Signale, das Steuergerät den Stellantrieb derart aktiviert, dass der Entladebereich (43) des Förderers geändert wird, sobald der programmierte Abstand erreicht ist.

10. Anlage entsprechend den jeweiligen Patentansprüchen 3 bis 9, **dadurch gekennzeichnet, dass** die Förderstationen (6, 8, 10, 14, 16, 18, 22, 24, 30, 32, 33, 36, 38, 40, 44) vorzugsweise Schneckenförderer und/oder geschlossene Bandförderer oder Redlerförderer sind.

11. Anlage entsprechend den jeweiligen Patentansprüchen 7 bis 10, **dadurch gekennzeichnet, dass** der Entladebereich des horizontalen Förderers (43) justierbar ist, da die Bodenplatte des Schneckenförderers (46) eine Öffnung (43) besitzt, die aufgrund der teleskopischen Konstruktion dieses Bodens in der Längsrichtung des Förderers bewegbar ist.

12. Anlage entsprechend dem Patentanspruch 11, dadurch **ge kennzeichnet**, dass der horizontale Schneckenförderer (44) in der Längsrichtung parallele kontinuierlich rollende Halter für das Aus- und Einrollen der Öffnungshaube des Containers darunter besitzt.

13. Anlage entsprechend den jeweiligen Patentansprüchen 3 bis 12, **dadurch gekennzeichnet, dass** die Anlage (1) auf einem Untergestell mit Rädern (47) aufgebaut ist.

14. Anlage entsprechend den jeweiligen Patentansprüchen 3 bis 13, **dadurch gekennzeichnet, dass** sie ferner einen Generator (3) besitzt dessen Leistung für die Energieversorgung der Anlage ausreichend ist.

15. Anlage entsprechend den jeweiligen Patentansprüchen 3 bis 14, **dadurch gekennzeichnet, dass** die Anlage geschlossen ist und am Auslass eine Absaugvorrichtung (54) mit Staub- und Partikelfiltern besitzt, die durch Druckluftgegenspülung derart gereinigt werden, dass der Staub von den Filtern durch den Schneckenförderer (18) mit dem internen Materialfluss zum Trommelsieb (20) geleitet wird.

## Revendications

1. Procédé de séparation et de retraitement de matériaux composés, de préférence de déchets de matériaux de construction, en utilisant l'installation selon la revendication 3, ledit procédé comprenant les étapes suivantes ;
a) - le broyage du matériau composé dans un broyeur (2)
b) - l'alimentation du matériau broyé dans une unité de déchiquetage à rouleaux (4), disposée directement sous le broyeur (2),
c) - le tamisage des matériaux déchiquetés et broyés dans un tamis afin de séparer les différents sous-composants du matériau composé (20),
d) - le transport des sous-composants séparés vers des bacs, des piles ou des conteneurs (50),
où, entre les étapes b) et c) du procédé, une première séparation des métaux de la matière broyée est effectuée dans un premier séparateur magnétique (12), et
où, entre les étapes c) et d) du procédé, une seconde séparation des métaux est effectuée dans un second séparateur magnétique (34) avec un ou plusieurs des sous-composants séparés.

2. La méthode faisant l'objet de la revendication 1 ou 2, **caractérisée en ce qu'**au moins un des sous-composants du matériau séparé est comprimé dans une unité de compression (26) et le matériau comprimé est traité de telle sorte que la forme comprimée soit maintenue.

3. Installation pour la séparation et le retraitement de matériaux composés, de préférence de déchets de matériaux de construction, comprenant un broyeur (2), une unité de déchiquetage à rouleaux (4) qui reçoit et broie le matériau broyé provenant du broyeur (2), une station de transport (16, 18) pour acheminer le matériau provenant de l'unité de broyage à rouleaux jusqu'à un tamis à tambour (20) prévu dans l'installation pour la séparation du matériau composé en au moins deux sous-fractions et un nombre de stations de transport (38, 40, 42, 44) correspondant au nombre de sous-fractions pour le transport de ces dernières vers un traitement ultérieur et/ou vers des piles, des bacs, des conteneurs ou autres réceptacles, **caractérisée par le fait que** l'installation entre l'unité de déchiquetage à rouleaux (4) et le tamis à tambour (20) comporte en outre une station de transport (6, 8, 10) pour le transport du matériau composé broyé vers un premier séparateur magnétique (12), un deuxième poste de transport (14) pour l'évacuation du métal séparé vers une première pile ou un premier conteneur pour déchets métalliques et que l'installation comporte en outre un deuxième séparateur magnétique (34) pour le traitement d'au moins une des sous-fractions du matériau composé provenant du tamis à tambour dans lequel le métal séparé est transporté par une quatrième station de transport (36) vers une deuxième pile ou un deuxième bac, conteneur ou autre réceptacle pour déchets métalliques et une cinquième station de transport (38, 40, 42, 44) pour transporter la sous-fraction de la matière composée libre de métal vers une pile, un bac, un conteneur (50) ou autre réceptacle, et que le tamis à tambour situé à proximité de la goulotte prévue pour la sous-fraction de carton comporte un rouleau intérieur en porte-à-faux qui est en contact avec le côté intérieur du tamis et qui écrase et libère le gypse des morceaux de carton.

4. Installation selon la revendication 3, **caractérisée par le fait qu'**elle comporte au moins une unité de compression (26) pour le traitement d'une ou plusieurs des sous-fractions du matériau composé séparées dans le tamis à tambour et, dans ce contexte, des stations de transport au moyen desquelles le matériau comprimé est acheminé vers des piles, des bacs, des conteneurs ou d'autres réceptacles.

5. Installation selon la revendication 3 ou 4, **caractérisée par le fait qu'**elle comporte une ou plusieurs unités de séparation (20, 26) pour la séparation du matériau en une ou plusieurs sous-fractions avec des stations de transport correspondantes pour acheminer les matériaux séparés et les sous-fractions résiduelles vers des piles, des bacs, des conteneurs (50) ou d'autres réceptacles.

6. Installation selon la revendication 3 ou 5, **caractérisée par le fait qu'**au moins une des stations de transport pour l'acheminement d'une ou plusieurs des sous-fractions du matériau composé vers une pile, un bac, un conteneur ou un autre réceptacle est un convoyeur (40) supporté de manière à pouvoir tourner et basculer.

7. Installation selon la revendication 6, **caractérisée par le fait que** le convoyeur (40), supporté de manière à pouvoir tourner et basculer, décharge les matériaux dans un convoyeur (44) essentiellement horizontal avec une zone de décharge (43) réglable dans le sens longitudinal du convoyeur au moyen d'un actionneur.

8. Installation selon la revendication 7, **caractérisée par le fait que** le convoyeur horizontal (44) comporte un capteur (48) pour l'enregistrement de la distance entre le niveau de la zone de décharge du convoyeur (43) et le niveau du matériau que le convoyeur décharge de sa zone de décharge.

9. Installation selon la revendication 8, **caractérisée par le fait que** le convoyeur est relié à une unité de commande qui est conçue de manière à ce que, sur la base d'une distance programmée entre la zone de décharge du convoyeur (43) et le niveau du matériau que le convoyeur décharge de la zone de décharge et des signaux reçus du capteur (48), l'unité de commande active l'actionneur pour modifier la zone de décharge du convoyeur (43) dès que la distance programmée est atteinte.

10. Installation selon l'une des revendications 3 à 9, **caractérisée par le fait que** les stations de transport (6, 8, 10, 14, 16, 18, 22, 24, 30, 32, 33, 36, 38, 40, 44) sont de préférence des convoyeurs à vis et/ou des convoyeurs à bande fermée ou des redlers.

11. Installation selon l'une des revendications 7 à 10, **caractérisée par le fait que** la zone de décharge du convoyeur horizontal (43) est réglable car la plaque inférieure du convoyeur à vis (46) présente une ouverture (43) qui est mobile dans le sens longitudinal du convoyeur en raison de la nature télescopique de ce fond.

12. Installation selon la revendication 11, **caractérisée par le fait que** le convoyeur à vis horizontale (44) voisin présente des supports de roulement continus parallèles pour le déroulement et l'enroulement du couvercle pour l'ouverture du réceptable sous-jacent.

13. Installation selon l'une des revendications 3 à 12, **caractérisée par le fait que** l'installation (1) est montée sur un châssis avec des roues (47).

14. Installation selon l'une des revendications 3 à 13, **caractérisée par le fait qu'**elle comporte en outre un générateur (3) dont la capacité est suffisante pour l'alimentation en électricité de l'installation.

15. Installation selon l'une des revendications 3 à 14, **caractérisée par le fait que** l'installation est fermée et comporte un dispositif d'aspiration (54) avec des filtres d'évacuation des poussières et des particules, lesdits filtres étant contrebalancés par de l'air comprimé, de sorte que la poussière filtrée au moyen du convoyeur à vis (18) est entraînée dans le flux de matière vers le tamis à tambour (20).
